# EUROPÄISCHE PATENTANMELDUNG

(11) **EP 4 300 780 A1**
(43) Veröffentlichungstag der Anmeldung: **03.01.2024**
(21) Anmeldenummer: 22181703.4
(22) Anmeldetag: 28.06.2022
(51) Int. Cl.: H02K 3/28, H02K 5/22, H02K 3/50

(54) **ANSCHLUSSVORRICHTUNGEN FÜR EINEN STATOR EINER ELEKTRISCHEN MASCHINE, STATORVORRICHTUNG FÜR EINE ELEKTRISCHE MASCHINE UND ELEKTRISCHER ANTRIEB FÜR EIN FAHRZEUG**

(71) Anmelder: Valeo eAutomotive Germany GmbH, 91056 Erlangen (DE)
(72) Erfinder: Lemmert, Kay, 97616 Bad Neustadt a.d.Saale (DE); Hellmuth, Stephan, 97616 Bad Neustadt a.d.Saale (DE); Finger-Albert, Christian, 97616 Bad Neustadt a.d.Saale (DE)
(74) Vertreter: Valeo Powertrain Systems

(57) **Zusammenfassung**

Anschlussvorrichtung (2) für einen Stator (3) einer elektrischen Maschine (203), aufweisend
- einen elektrisch isolierenden Isolationskörper (13), der einen plattenförmigen Basisabschnitt (15) mit einer ersten Seite (16), mit einer der ersten Seite (16) gegenüberliegenden zweite Seite (17), und mit einer Ausnehmung (18a-c) sowie einen an der ersten Seite angeordneten Positionierabschnitt (20a-c) aufweist; und
- ein elektrisch leitfähiges Anschlusselement (14a-c), das
(i) zwei Schenkelabschnitte (21a, 21b), die sich von der ersten Seite (16) des Basisabschnitts (15) weg erstrecken und jeweils einen zur Ausnehmung (18a-c) weisenden Vorsprung (23) aufweisen,
(ii) einen Verbindungsabschnitt (22), der die Schenkelabschnitte (21a, 21b) an ihrem der ersten Seite (16) des Basisabschnitts (15) abgewandten Ende verbindet,
(iii) und ein Befestigungsmittel (24) zum elektrisch leitfähigen und mechanischen Verbinden des Verbindungsabschnitts (22) mit einem elektrischen Leiter (205)
aufweist und durch den Positionierabschnitt (20a-c) am Isolationskörper angeordnet ist;

wobei in der Ausnehmung (18a-c) zwei Anschlussabschnitte (10a-c, 11a-c) einer Statorwicklung (5) des Stators (3) zum elektrisch leitfähigen und mechanischen Verbinden mit dem Vorsprung (23) der Schenkelabschnitte (21a, 21b) anordenbar sind, um eine elektrische leitfähige Verbindung der Anschlussabschnitte (10a-c, 11a-c) über das Anschlusselement (14a-c) mit dem elektrischen Leiter (205) auszubilden.

## Beschreibung

Die vorliegende Erfindung betrifft eine Anschlussvorrichtung für einen Stator einer elektrischen Maschine. Daneben betrifft die Erfindung eine Statorvorrichtung für eine elektrische Maschine und einen elektrischen Antrieb für ein Fahrzeug.

Um eine Statorwicklung eines Stators mit einer Spannungsquelle zur Bestromung der Statorwicklung zu verbinden, werden regelmäßig Anschlussvorrichtungen verwendet, die einerseits ein Anschlusselement zum elektrisch leitfähigen Verbinden eines Anschlussabschnitts der Statorwicklung mit einem elektrischen Leiter bereitstellen und andererseits das Anschlusselement gegenüber einem Wicklungskopf der Statorwicklung elektrisch isolieren.

Die US 2013/0147306 A1 offenbart beispielsweise einen Abstandshalter zum Abstützen von Leitern einer Statoranordnung einer elektrischen Maschine. Der Abstandshalter umfasst einen Isolationskörper aus einem elektrisch nichtleitenden Material. In dem Isolationskörper sind Phasenführungstaschen zum Aufnehmen von Phasenleitern ausgebildet. Am Ende eines jeweiligen Phasenleiters sind Ösen zum Anschließen der Phasenleiter angeordnet. Dabei werden jeweils zwei Phasenleiter durch eine Öse zusammengeschaltet.

Wenn das Anschlusselement mit den Anschlussabschnitten der Statorwicklung im Rahmen der Fertigung einer Statorvorrichtung, insbesondere mittels Schweißens, verbunden wird, ist einerseits eine ausreichende Kontaktfläche des Anschlusselements für den Anschlussabschnitt vorzusehen. Insbesondere im Hinblick auf eine automatisierte Fertigung bestehen im Übrigen hohe Anforderungen an eine genaue Positionierung des Anschlusselements auf dem Isolationskörper.

Der Erfindung liegt die Aufgabe zugrunde, eine verbesserte, insbesondere eine automatisierte Fertigung erleichternde, Möglichkeit zum Anschließen einer Statorwicklung an eine die Statorwicklung versorgende Spannungsquelle anzugeben.

Diese Aufgabe wird erfindungsgemäß gelöst durch eine Anschlussvorrichtung für einen Stator einer elektrischen Maschine, aufweisend einen elektrisch isolierenden Isolationskörper, der einen plattenförmigen Basisabschnitt mit einer ersten Seite, mit einer der ersten Seite gegenüberliegenden zweite Seite, und mit einer Ausnehmung sowie einen an der ersten Seite angeordneten Positionierabschnitt aufweist; und ein elektrisch leitfähiges Anschlusselement, das zwei Schenkelabschnitte, die sich von der ersten Seite des Basisabschnitts weg erstrecken und jeweils einen zur Ausnehmung weisenden Vorsprung aufweisen, einen Verbindungsabschnitt, der die Schenkelabschnitte an ihrem der ersten Seite des Basisabschnitts abgewandten Ende verbindet, und ein Befestigungsmittel zum elektrisch leitfähigen und mechanischen Verbinden des Verbindungsabschnitts mit einem elektrischen Leiter aufweist und durch den Positionierabschnitt am Isolationskörper angeordnet ist; wobei in der Ausnehmung zwei Anschlussabschnitte einer Statorwicklung des Stators zum elektrisch leitfähigen und mechanischen Verbinden mit dem Vorsprung der Schenkelabschnitte anordenbar sind, um eine elektrische leitfähige Verbindung der Anschlussabschnitte über das Anschlusselement mit dem elektrischen Leiter auszubilden.

Die erfindungsgemäße Anschlussvorrichtung für einen Stator einer elektrischen Maschine weist einen Isolationskörper auf. Der Isolationskörper ist elektrisch isolierend. Der Isolationskörper weist einen plattenförmigen Basisabschnitt auf. Der Basisabschnitt weist eine erste Seite und eine zweite Seite auf. Die zweite Seite liegt der ersten Seite gegenüber. Der Basisabschnitt weist ferner eine Ausnehmung auf. Der Isolationskörper weist ferner einen an der ersten Seite angeordneten Positionierabschnitt auf. Die erfindungsgemäße Anschlussvorrichtung weist ferner ein Anschlusselement auf. Das Anschlusselement ist elektrisch leitfähig. Das Anschlusselement weist zwei Schenkelabschnitte auf. Die Schenkelabschnitte erstrecken sich von der ersten Seite des Basisabschnitts weg. Die Schenkelabschnitte weisen jeweils einen zur Ausnehmung weisenden Vorsprung auf. Das Anschlusselement weist ferner einen Verbindungsabschnitt auf. Der Verbindungsabschnitt verbindet die Schenkelabschnitte an ihrem Ende, das der ersten Seite des Basisabschnitts abgewandt ist. Das Anschlusselement weist ferner ein Befestigungsmittel auf. Das Befestigungsmittel ist zum elektrisch leitfähigen und mechanischen Verbinden des Verbindungsabschnitts mit einem elektrischen Leiter vorgesehen. Das Anschlusselement ist ferner durch den Positionierabschnitt am Isolationskörper angeordnet. In der Ausnehmung sind zwei Anschlussabschnitte einer Statorwicklung des Stators zum elektrisch leitfähigen und mechanischen Verbinden mit dem Vorsprung der Schenkelabschnitte anordenbar, um eine elektrisch leitfähige Verbindung der Anschlussabschnitte über das Anschlusselement mit dem elektrischen Leiter auszubilden.

Die Erfindung beruht auf der Überlegung, die Position des Anschlusselements auf der ersten Seite des Basisabschnitts durch den Positionierabschnitt des Isolationskörpers sicherzustellen. Die Vorsprünge des Anschlusselements können so präzise bezüglich der Ausnehmung angeordnet werden, um die Anschlussabschnitte der Statorwicklung durch die Ausnehmung an die Vorsprünge heranzuführen. Die Anschlussabschnitte können dann mit jeweils einem Vorsprung, vorzugsweise stoffschlüssig, kontaktiert werden. Dadurch wird eine genaue Anordnung der Anschlussabschnitte bezüglich der Vorsprünge ermöglicht, was die automatisierte Fertigung einer Statorvorrichtung mit der Anschlussvorrichtung und mit dem Stator vorteilhafterweise erleichtert.

In bevorzugter Ausgestaltung ist der Isolationskörper aus einem Kunststoff gebildet. Der Basisabschnitt ist bevorzugt ringsektorförmig, sodass er sich um eine gedachte Längsachse erstreckt. Die Schenkelabschnitte erstrecken sich dann vorzugsweise parallel zur Längsachse. Der Vorsprung kann radial, insbesondere von der Längsachse wegweisend, vom Schenkelabschnitt abstehen. Die Ausnehmung ist bevorzugt randseitig am Basisabschnitt ausgebildet. Die Ausnehmung ist vorzugsweise offen und/oder an einem radial von der Längsachse abgewandten Rand des Basisabschnitts vorgesehen.

Das Anschlusselement ist bevorzugt eine mehrfach gebogene Stromschiene. Der Verbindungsabschnitt kann sich in einer senkrecht zur Längsachse stehenden Ebene von einem Schenkelabschnitt zum anderen Schenkelabschnitt erstrecken. Vorzugsweise weist das Abschlusselement ein U-Profil auf. Die Stromschiene entlang ihrer Erstreckungsrichtung von einem der Schenkelabschnitte über den Verbindungsabschnitt zum anderen der Schenkelabschnitte einen rechteckigen Querschnitt mit einer Schmalseite und einer Breitseite aufweisen. Der Vorsprung steht vorzugsweise von einer der Schmalseiten ab.

Die Statorwicklung ist vorzugsweise aus einer Vielzahl von Formleitern ausgebildet, von denen einer den Anschlussabschnitt ausbildet. Die Formleiter sind vorzugsweise aus, insbesondere mehrfach, gebogenen Metallstäben gebildet. Eine solche Statorwicklung kann auch als Haarnadelwicklung (engl. hair pin winding) bezeichnet werden.

Bevorzugt sind mehrere, insbesondere eine Anzahl der Phasen der Statorwicklung entsprechende Anzahl, von Positionierabschnitten und für jeden Positionierabschnitt ein Anschlusselement und eine Ausnehmung vorgesehen.

In bevorzugter Ausgestaltung der erfindungsgemäßen Anschlussvorrichtung weist das Befestigungsmittel ein Innengewinde auf. Dadurch lässt sich der elektrische Leiter mechanisch robust am Befestigungsmittel und damit am Anschlusselement befestigen.

Alternativ oder zusätzlich kann im Verbindungsabschnitt eine Durchgangsöffnung ausgebildet sein, in die das Befestigungsmittel eingepresst ist. In diesem Fall ist das Anschlusselement mehrteilig ausgebildet. Es ist aber auch möglich, dass das Befestigungsmittel einstückig mit dem Verbindungsabschnitt ausgebildet ist.

Bei der erfindungsgemäßen Anschlussvorrichtung ist bevorzugt vorgesehen, dass das Befestigungsmittel als Buchse ausgebildet ist, die sich vom Verbindungsabschnitt in einen durch die Schenkelabschnitte begrenzten Zwischenraum erstreckt. Der Positionierabschnitt kann dann innerhalb des Zwischenraums mit der Buchse zur Positionierung des Anschlusselements wirkverbunden sein.

Bevorzugt weist der Positionierabschnitt ein auf der ersten Seite ausgebildetes Zentrierelement auf, dass zumindest abschnittsweise gegengleich zur Buchse ausgebildet ist. Vorzugsweise umgreift das Zentrierelement abschnittsweise die Buchse, um eine Relativposition des Anschlusselements bezüglich des Basisabschnitts bzw. des Isolationskörpers vorzugeben.

In bevorzugter Ausgestaltung der erfindungsgemäßen Anschlussvorrichtung ist ferner vorgesehen, dass der Positionierabschnitt ein sich von einem der Schenkelabschnitte zum anderen der Schenkelabschnitte erstreckendes Begrenzungselement aufweist, durch das eine Translationsbewegung des Anschlusselements parallel zum Basisabschnitt hemmbar ist. Das Begrenzungselement erstreckt sich bevorzugt zwischen den Schenkelabschnitten. Das Zentrierelement kann abschnittsweise als Einbuchtung des Begrenzungselements ausgebildet sein.

In bevorzugter Weiterbildung der erfindungsgemäßen Anschlussvorrichtung ist vorgesehen, dass der Positionierabschnitt für zumindest einen Schenkelabschnitt des durch ihn positionierten Anschlusselements wenigstens einen außerhalb der Schenkelabschnitte angeordneten Anschlag aufweist, durch den eine Rotation des Anschlusselements um eine senkrecht zum Basisabschnitt stehende Rotationsachse hemmbar ist und/oder durch den eine Translationsbewegung des Anschlusselements parallel zum Basisabschnitt hemmbar ist. Besonders bevorzugt sind an der Außenseite eines jeweiligen Schenkelabschnitts jeweils zwei Anschläge vorgesehen.

Der Isolationskörper der erfindungsgemäßen Anschlussvorrichtung kann ferner Abschirmelemente aufweisen, die das Anschlusselement schenkelabschnittseitig zur Verlängerung von Luft- und Kriechstrecken umgeben. Die Abschirmelemente erstrecken sich bevorzugt weiter, insbesondere in axialer Richtung, von der ersten Seite weg als das Anschlusselement. In bevorzugter Ausgestaltung ist der wenigstens ein Anschlag an dem Abschirmelement angeordnet und/oder einstückig mit dem Abschirmelement ausgebildet. Der Anschlag kann senkrecht vom Abschirmelement abstehen.

Gemäß einer besonders bevorzugten Ausgestaltung der erfindungsgemäßen Anschlussvorrichtung ist vorgesehen, dass der Positionierabschnitt für jeden Schenkelabschnitt des durch ihn positionierten Anschlusselements ein Halteelement aufweist, durch welchen eine von der ersten Seite wegweisende Bewegung des Anschlusselements hemmbar ist. Insbesondere ist das Halteelement dazu eingerichtet, das Anschlusselement am Isolationskörper zu haltern. Das Halteelement kann zwischen den Schenkelabschnitten angeordnet sein.

In Weiterbildung kann vorgesehen sein, dass die Schenkelabschnitte jeweils eine Ausnehmung aufweisen und das Halteelement zum formschlüssigen Eingreifen in die Ausnehmung ausgebildet ist. Besonders bevorzugt wird durch die Ausnehmung und das Halteelemente eine Rastverbindung realisiert.

Außerdem kann vorgesehen sein, dass das Halteelement exzentrisch bezüglich des Schenkelabschnitts angeordnet ist, um ein Wechselwirken des Schenkelabschnitts mit dem Halteelement bei einer um 180° gedrehten Anordnung zu hemmen. Mit anderen Worten kann durch exzentrische Anordnung eine Verdrehsicherung bei einer Positionierung des Anschlusselements am Isolationskörper realisiert werden. Dadurch können vorteilhafterweise Fehlpositionierungen des Anschlusselements vermieden werden, da ein Werker ein fehlerhaftes, d. h. um 180° verdreht, Anordnen wegen der Inkompatibilität von Halteelement und Anordnungen dieser Position unmittelbar bemerkt.

In bevorzugter Ausgestaltung weist die erfindungsgemäße Anschlussvorrichtung ferner einen zweiten Isolationskörper auf, der auf der zweiten Seite des ersten Isolationskörpers angeordnet ist. Der zweite Isolationskörper kann einen plattenförmigen Basisabschnitt und mehrere Abstandshalter, die dem Basisabschnitt des zweiten Isolationskörpers vom Basisabschnitt des ersten Isolationskörper beabstanden, aufweisen.

Der zweite Isolationskörper kann insbesondere dazu eingerichtet sein, eine Sternpunktverbindung des Stators aufzunehmen, die sich zwischen den Basisabschnitten der Isolationskörper befindet. Der zweite Isolationskörper kann dazu auf der ersten Seite seines Basisabschnitts mehrere Führungselemente aufweisen. Durch die Führungselemente kann eine Bewegung des Sternpunktleiters entlang seiner Längsrichtung und/oder quer zu seiner Längsrichtung hemmbar sein.

Am Basisabschnitt des zweiten Isolationskörpers können auf seiner den Abstandshaltern gegenüberliegenden Seite mehrere Beine angeordnet sein, die dazu eingerichtet sind, am Stator anzuschlagen, um den Basisabschnitt des zweiten Isolationskörpers beabstandet vom Stator zu positionieren.

In Weiterbildung kann ferner vorgesehen sein, dass der Basisabschnitt des zweiten Isolationskörpers mehrere Durchgangsöffnungen aufweist, durch welche die Verbindungsabschnitte der Statorwicklung zu den Ausnehmungen hindurchgeführt bzw. durchführbar sind.

Es kann ferner vorgesehen sein, dass der zweite Isolationskörper mehrere Halteelemente aufweist, die vom Basisabschnitt des zweiten Isolationskörpers in vom ersten Isolationskörper wegweisende Richtung abstehen und dazu eingerichtet sind, den zweiten Isolationskörper an einem Wicklungskopf des Stators zu haltern.

Dabei kann zumindest ein Teil der Befestigungsabschnitte als Rastelement ausgebildet sein, das eine Durchgangsöffnung des Basisabschnitts des ersten Isolationskörpers durchsetzt und zum Befestigen den Basisabschnitt des ersten Isolationskörpers auf dessen erster Seite hintergreift. Alternativ oder zusätzlich ist vorgesehen, dass zumindest ein Teil der Befestigungsabschnitte mit einem den Basisabschnitt des ersten Isolationskörpers durchsetzenden Befestigungsmittel, insbesondere eine Schraube, in Eingriff ist.

Die Erfindung zugrunde liegende Aufgabe wird ferner gelöst durch eine Statorvorrichtung für eine elektrische Maschine, aufweisend: einen Stator, aufweisend einen Statorkern mit einer Statorlängsachse, einer ersten Stirnseite und einer der ersten Stirnseite axial bezüglich der Statorlängsachse gegenüberliegenden zweiten Stirnseite, einer Statorwicklung, die an der ersten Stirnseite einen Wicklungskopf ausbildet und mehrere sich über den Wicklungskopf hinaus erstreckende Anschlussabschnitte aufweist, und eine erfindungsgemäße Anschlussvorrichtung, wobei die zwei Anschlussabschnitte elektrisch leitfähig und mechanisch mit den Schenkelabschnitten des Anschlusselements, insbesondere stoffschlüssig, verbunden sind. Insbesondere sind die zwei Anschlussabschnitte elektrisch leitfähig und mechanischen mit dem Vorsprung eines jeweiligen Schenkelabschnitts des Anschlusselements verbunden.

Die Halteelemente des zweiten Isolationskörpers können Halteelemente erster Art umfassen, die zumindest abschnittsweise derart elastisch verformbar sind, dass sie eine Rückstellkraft zum Haltern des Isolationskörpers auf den Wickelkopf ausüben. Dabei kann in Weiterbildung vorgesehen sein, dass die Haltelemente Halteelemente zweiter Art umfassen, die dazu eingerichtet sich eine Gegenkraft der Rückstellkraft aufzunehmen.

Bevorzugt weisen die Halteelemente erster Art jeweils einen Rahmen und innerhalb des Rahmens ausgebildete elastisch verformbare Zungen auf, die am Rahmen gelagert sind und die Rückstellkraft auf den Wicklungskopf ausüben.

Der Sternpunktleiter kann mit weiteren Anschlussabschnitten der Statorwicklung elektrisch leitfähig und mechanisch verbunden sein. Außerdem kann der Basisabschnitt des zweiten Isolationskörpers weitere Durchgangsöffnungen aufweisen, durch welche die weiteren, mit dem Sternpunktleiter verbundenen Anschlussabschnitte durchgeführt sind.

Die der Erfindung zugrunde liegende Aufgabe wird ferner gelöst durch einen elektrischen Antrieb für ein Fahrzeug, aufweisend: eine erfindungsgemäße Statorvorrichtung, einen drehbar bezüglich der Statorvorrichtung gelagerten Rotor, sodass die Statorvorrichtung und der Rotor eine elektrische Maschine ausbilden, einen Stromrichter zur elektrischen Versorgung der Statorwicklung und einen elektrischen Leiter, welcher eine elektrisch leitfähige Verbindung zwischen dem Stromrichter und dem Anschlusselement herstellt und an dem das Befestigungsmittel des Anschlusselements elektrisch leitfähig befestigt ist.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
- Fig. 1: eine perspektivische Ansicht eines Ausführungsbeispiels der erfindungsgemäßen Statorvorrichtung mit einem Ausführungsbeispiel der erfindungsgemäßen Anschlussvorrichtung;
- Fig. 2: eine perspektivische Ansicht der Anschlussvorrichtung;
- Fig. 3: eine perspektivische Ansicht eines Anschlusselements;
- Fig. 4: eine Draufsicht auf den ersten Isolationskörper;
- Fig. 5: eine perspektivische Detailansicht des ersten Isolationskörpers;
- Fig. 6: eine perspektivische Detailansicht des ersten Isolationskörpers mit dem angeordneten Anschlusselement;
- Fig. 7: eine perspektivische Ansicht des zweiten Isolationskörpers;
- Fig. 8 u. 9: jeweils eine perspektivische Detailansicht des Stators und des zweiten Isolationskörpers;
- Fig. 10: eine geschnittene Ansicht des Stators und des zweiten Isolationskörpers;
- Fig. 11: eine perspektivische Ansicht der beiden Isolationskörper; und
- Fig. 12: eine Prinzipskizze eines Fahrzeugs mit einem Ausführungsbeispiel des erfindungsgemäßen elektrischen Antriebs.

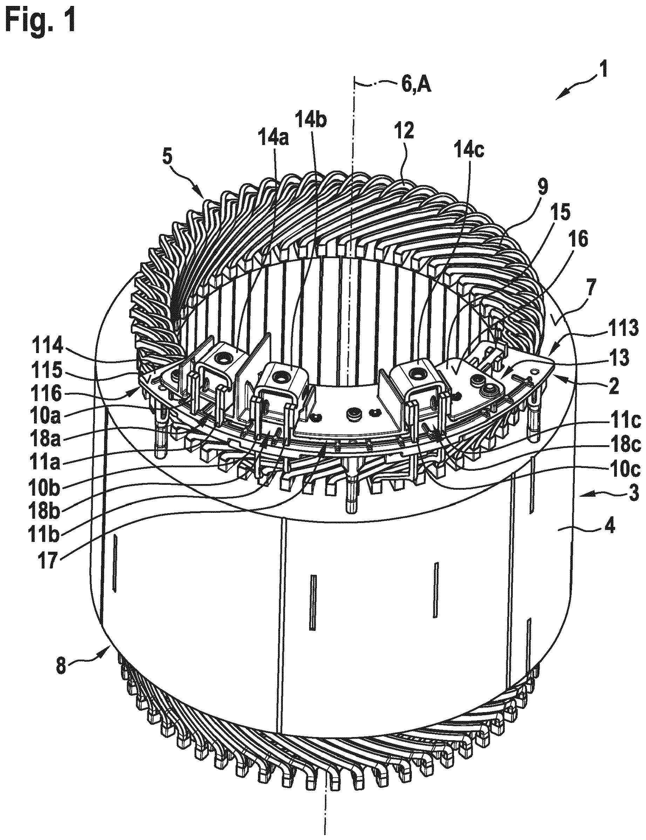

Fig. 1 ist eine perspektivische Ansicht eines Ausführungsbeispiels einer Statorvorrichtung 1 mit einem Ausführungsbeispiel einer Anschlussvorrichtung 2.

Die Statorvorrichtung 1 weist neben der Anschlussvorrichtung 2 einen Stator 3 mit einem Statorkern 4 und einer Statorwicklung 5 auf.

Der Statorkern 4 weist eine Statorlängsachse 6, eine erste Stirnseite 7 und eine der ersten Stirnseite 7 gegenüberliegende zweite Stirnseite 8 auf. Der Statorkern 4 ist exemplarisch aus einer Vielzahl axial geschichtet angeordneter und gegeneinander isolierter Einzelbleche (nicht gezeigt) gebildet und kann daher auch als Statorblechpaket bezeichnet werden.

Die Statorwicklung 5 bildet an der ersten Stirnseite 7 einen Wicklungskopf 9 aus und weist an der ersten Stirnseite 7 mehrere Anschlussabschnitte 10a, 10b, 10c, 11a, 11b, 11c auf. Im vorliegenden Ausführungsbeispiel ist die Statorwicklung 5 aus einer Vielzahl von Formleitern 12 ausgebildet, die sich jeweils axial durch den Statorkern 4 erstrecken und an der zweiten Stirnseite 8 elektrisch leitfähig und mechanisch miteinander verbunden, beispielsweise verschweißt, sind. Die Statorwicklung 5 kann daher auch als Haarnadelwicklung (engl. hair pin winding) erachtet werden.

Die Anschlussvorrichtung 2 weist einen elektrisch isolierenden ersten Isolationskörper 13 und drei elektrisch leitfähige Anschlusselemente 14a, 14b, 14c auf. Der erste Isolationskörper 13 weist einen plattenförmigen Basisabschnitt 15 mit einer ersten Seite 16 sowie einer der ersten Seite gegenüberliegenden zweiten Seite 17 auf. Die zweite Seite 17 ist der ersten Stirnseite 7 des Statorkerns 4 und dem Wicklungskopf 9 zugewandt.

Für jedes Anschlusselement 14a-c weist der Basisabschnitt 15 eine Ausnehmung 18a, 18b, 18c auf. In den Ausnehmungen 18a, 18b, 18c sind jeweils zwei der Anschlussabschnitte 10a-c, 11a-c anordenbar. Die zwei Anschlussabschnitte 10a-c, 11a-c sind mechanisch und elektrisch leitfähig, beispielsweise durch Schweißen, mit einem der Anschlusselemente 14a-c verbunden. Dabei sind die zwei durch eines der Anschlusselemente 14a-c verbundenen Anschlussabschnitte 10a-c, 11a-c jeweils einer Phase der Statorwicklung 5 zugeordnet.

Im vorliegenden Ausführungsbeispiel ist der Basisabschnitt 15 exemplarisch ringsektorförmig ausgebildet und erstreckt sich um eine Längsachse A, die hier auf der Statorlängsachse 6 liegt.

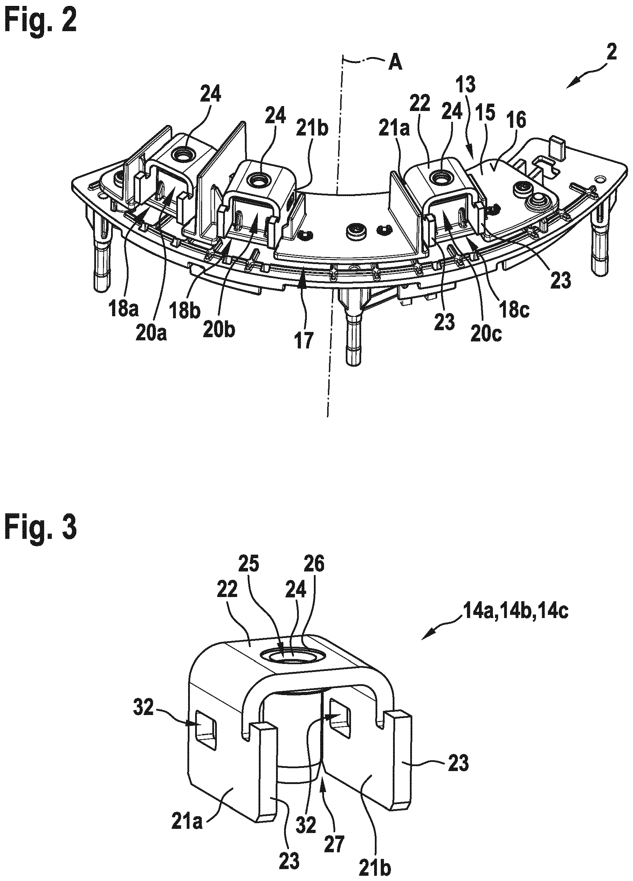

Fig. 2 ist eine perspektivische Ansicht der Anschlussvorrichtung 2. Fig. 3 ist eine perspektivische Ansicht eines Anschlusselements 14a-c.

Auf der ersten Seite 16 weist der erste Isolationskörper 13 für jedes Anschlusselement 14a-c einen Positionierabschnitt 20a, 20b, 20c auf, durch welches das Anschlusselement 14a-c am Isolationskörper 13 angeordnet ist. Die Anschlusselemente 14a-c weisen jeweils zwei Schenkelabschnitte 21a, 21b auf, die sich von ersten Seite 16 weg erstrecken. Im vorliegenden Fall des ringsektorförmigen Basisabschnitts 15 erstrecken sich die Schenkelabschnitte folglich in axiale Richtung bezüglich der Längsachse A. Daneben weist jedes Anschlusselement 14a-c einen Verbindungsabschnitt 22 auf, der die Schenkelabschnitte 21a, 21b an ihrem der ersten Seite 16 abgewandten Ende verbindet.

Jeder Schenkelabschnitt 21a, 21b weist einen zur Ausnehmung 18a-c weisenden Vorsprung 23 auf. Bezogen auf die Längsachse A erstrecken sich die Vorsprünge 23 radial nach außen. Wie in einer Zusammenschau mit Fig. 1 zu sehen ist, können die Anschlussabschnitte 10a-c, 11a-c paarweise an den Innenseiten der Vorsprünge 23 angeschweißt werden, um die elektrisch leitfähige und mechanische Verbindung auszubilden.

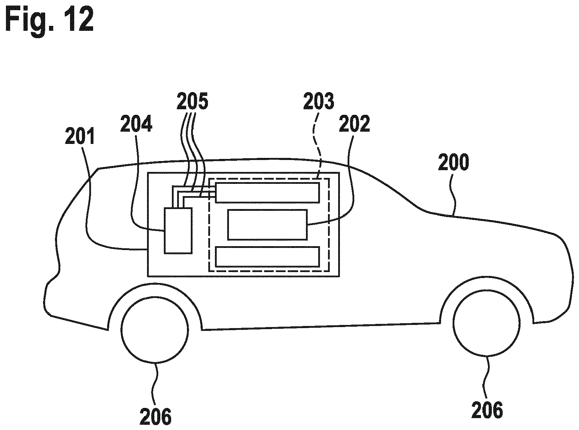

Zusätzlich weist jedes Anschlusselement 14a-c ein Befestigungsmittel 24 zum elektrisch leitfähigen und mechanischen Verbinden des Verbindungsabschnitts 22 mit einem elektrischen Leiter 205 (siehe Fig. 12) auf. Das Befestigungsmittel 24 ist als Buchse ausgebildet und weist ein Innengewinde 25 auf. Das Befestigungsmittel 24 ist in eine Durchgangsöffnung 26 des Verbindungsabschnitts 22 eingepresst. Die Buchse erstreckt sich, insbesondere axial, in einen durch die Schenkelabschnitte 21a, 21b begrenzten Zwischenraum 27.

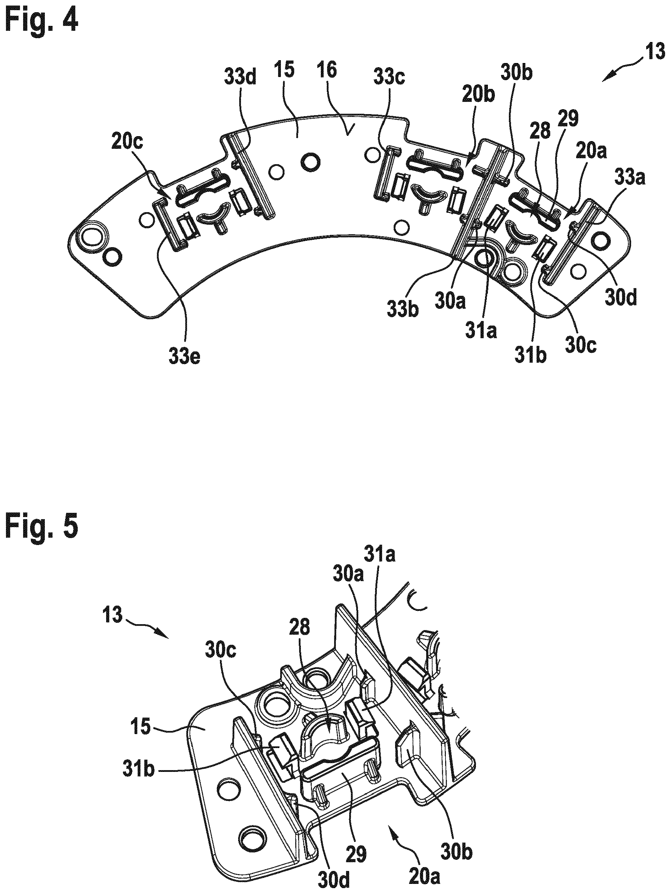

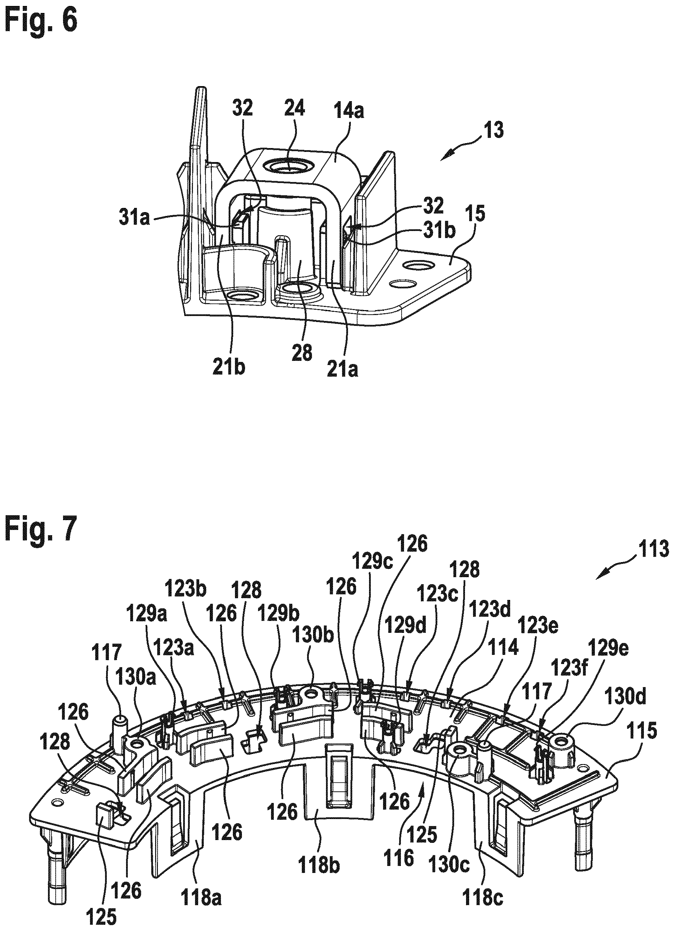

Fig. 4 und Fig. 5 zeigen den ersten Isolationskörper 13, wobei Fig. 4 eine Draufsicht auf dessen erste Seite 16 ist und Fig. 5 eine perspektivische Detailansicht des Positionierabschnitts 20a ist. Fig. 6 ist eine perspektivische Detailansicht des ersten Isolationskörpers 13 mit dem angeordneten Anschlusselement 14a. Im Folgenden wird anhand des Positionierabschnitts 20a und des Anschlusselements 14a repräsentativ für die weiteren Positionierabschnitte 20b, 20c und Anschlusselemente 14b, 14c die Anordnung der Anschlusselemente 14a-c am ersten Isolationskörper 13 erläutert.

Der Positionierabschnitt 20a weist zunächst ein auf der ersten Seite 16 ausgebildetes Zentrierelement 28 auf. Das Zentrierelement 28 ist zweigeteilt und abschnittsweise gegengleich zur als Buchse ausgebildeten Befestigungsmittel 24 geformt. Zur Zentrierung des Anschlusselements 14a ist das Befestigungsmittel 24 in das Zentrierelement 28 eingeführt.

Zur Hemmung einer Translationsbewegung des Anschlusselements 14a weist der Positionierabschnitt 20a für jeden Schenkelabschnitt ein sich von Schenkelabschnitt 21a zum Schenkelabschnitt 21b erstreckendes Begrenzungselement 29 sowie außerhalb der Schenkelabschnitte 21a, 21b angeordnete Anschläge 30a, 30b, 30c, 30d auf. Dabei sind hier exemplarisch an jeder Außenseite eines der Schenkelabschnitte 21a, 21b zwei Anschläge 30a-d vorgesehen. Durch die Anschläge 30a-d ist ferner eine Rotationsbewegung des Anschlusselements 14a um eine senkrecht zum Basisabschnitt 15 stehende Rotationsachse hemmbar. Im vorliegenden Ausführungsbeispiel ist das Zentrierelement 28 teilweise einstückig mit Begrenzungselement 29 ausgebildet.

Außerdem weist der Positionierabschnitt 20a für jeden Schenkelabschnitt 21a, 21b ein Haltelement 31a, 31b auf, das vorliegend als Rastelement ausgebildet ist. Durch die Haltelemente 31a, 31b ist eine von der ersten Seite 16 wegweisende bzw. in axiale Richtung bezüglich der Längsachse A weisende Bewegung des Anschlusselements 14a hemmbar. Dazu weist jeder Schenkelabschnitt 21a, 21b eine Ausnehmung 32 (vgl. auch Fig. 3) auf, in welche das Halteelement 31a, 31b formschlüssig eingreift. Als zusätzlich Sicherung gegen ein um 180° verdrehtes Einsetzen des Anschlusselements 14a in den Positionierabschnitt 20a sind die Halteelemente 31a, 31b exzentrisch bezüglich des entsprechenden Schenkelabschnitts 21a, 21b angeordnet.

Zur Verlängerung von Luft- und Kriechstrecken zwischen den Anschlusselementen 14a-c und/oder weiteren elektrische leitfähigen Komponenten in der Umgebung des Anschlusselements 14a-c weist der erste Isolationskörper 13 ferner Abschirmelemente 33a, 33b, 33c, 33d, 33e auf, die das jeweilige Abschlusselement 13a-c schenkelabschnittseitig umgeben. Dabei sind die Anschläge 30a-d einstückig mit den Abschirmelementen 33a-e ausgebildet.

Wieder mit Bezug zu Fig. 1 weist die Anschlussvorrichtung 2 außerdem einen zweiten Isolationskörper 113 auf. Der zweite Isolationskörper 113 ist auf der zweiten Seite 16 des ersten Isolationskörpers 13 bzw. zwischen der ersten Stirnseite 7 des Statorkerns 4 und dem ersten Isolationskörper 13 angeordnet. Der zweite Isolationskörper 113 weist einen plattenförmigen Basisabschnitt 114 mit einer dem Wicklungskopf 9 abgewandten bzw. dem ersten Isolationskörper 13 zugewandten ersten Seite 115 und einer dem Wicklungskopf 9 zugewandten bzw. dem ersten Isolationskörper 13 abgewandten zweiten Seite 116 auf. Der Basisabschnitt 114 ist ringsektorförmig ausgebildet und erstreckt sich ebenfalls um die Längsachse A.

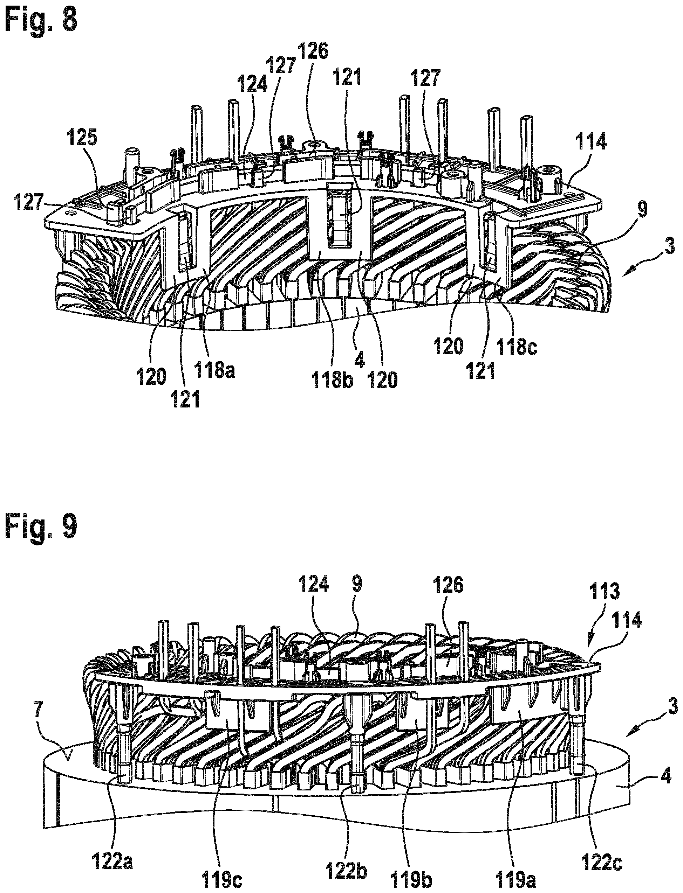

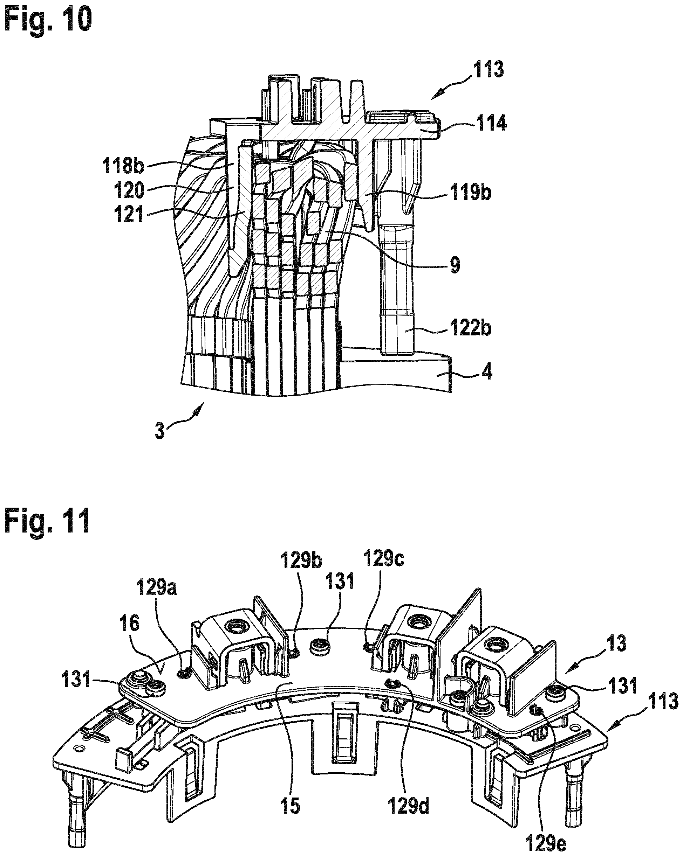

Fig. 7 bis Fig. 10 sind zeigen jeweils den zweiten Isolationskörper 113, wobei Fig. 7 eine perspektivische Ansicht des zweiten Isolationskörpers 113 ist, Fig. 8 und Fig. 9 jeweils eine perspektivische Ansicht des Stators 3 und des zweiten Isolationskörpers 113 sind und Fig. 10 eine geschnittene des Stators 3 und des zweiten Isolationskörpers 113 ist.

Der zweite Isolationskörper 113 weist zunächst zwei Abstandshalter 117 auf, die den ersten Isolationskörper 13 vom zweiten Isolationskörper 113 beabstanden. Außerdem weist der zweite Isolationskörper 113 mehrere Halteelemente 118a, 118b, 118c, 119a, 119b, 119c auf, die dazu eingerichtet sind, den zweiten Isolationskörper 113 am Wicklungskopf 9 zu haltern. Die Halteelemente 118a-c, 119a-c sind dabei an der zweite Seite 116 des Basisabschnitts 114 angeordnet und stehen in zum Statorkern 4 weisende Richtung vom Basisabschnitt 114 ab.

Die Halteelemente 118a-c, 119a-c umfassen Halteelemente erster Art 118a-c und Halteelemente 119a-c zweiter Art. Die Haltelemente erster Art 118a-c sind abschnittsweise derart elastisch verformbar, dass sie eine Rückstellkraft zum Haltern des zweiten Isolationskörpers 113 ausüben. Die Halteelemente zweiter Art 119a-c sind dazu eingerichtet eine Gegenkraft der Rückstellkraft aufzunehmen. Dazu sind die Halteelemente erster Art 118a-c und die Halteelemente zweiter Art 119a-c auf gegenüberliegenden radialen Seiten des Wicklungskopfs 9 angeordnet. Im vorliegenden Ausführungsbeispiel sind die Halteelemente erster Art 118a-c radial innen am Wicklungskopf 9 und die Halteelemente zweiter Art 119a-c radial außen am Wicklungskopf 9 angeordnet. Alternativ können aber auch die Halteelemente erster Art 118a-c radial außen am Wicklungskopf 9 und die Halteelemente zweiter Art 119a-c radial innen am Wicklungskopf 9 angeordnet sein.

Im Detail weisen die Halteelemente erster Art 118a-c jeweils einen Rahmen 120 und innerhalb des Rahmens ausgebildete elastisch verformbare Zungen 121 auf. Die Zungen 121 sind am Rahmen gelagert und üben die Rückstellkraft auf den Wicklungskopf 9 auf.

Der zweite Isolationskörper 113 weist ferner drei Beine 122a, 122b, 122c auf. Die Beine sind auf der zweiten Seite 116 ausgebildet und liegen auf der ersten Stirnseite 7 des Statorkerns 4 auf. Dadurch beabstanden die Beine 122a, 122b, 122c den Basisabschnitt 114 von der ersten Stirnseite 7.

Des Weiteren weist der Basisabschnitt 114 für jeden Anschlussabschnitt 10a-c, 11a-c eine Durchgangsöffnung 123a, 123b, 123c, 123d, 123e, 123f (siehe Fig. 7) auf. Dabei durchsetzt jeder der Anschlussabschnitte 10a-c, 11a-c eine der Durchgangsöffnungen 123a-f, sodass jeweils ein Paar der Anschlussabschnitte 10a-c, 11a-c in die Ausnehmungen 18a-c des Basisabschnitts 15 des ersten Isolationskörpers 13 geführt ist.

Wie in Fig. 8 und Fig. 9 am besten zu erkennen ist, weist die Anschlussvorrichtung 2 fernen einen als Stromschiene ausgebildeten Sternpunktleiter 124 auf. Der Sternpunktleiter 124 ist in mehreren Führungselementen 125, 126, die von der ersten Seite 115 des Basisabschnitts 114 des zweiten Isolationskörpers 113 abstehen angeordnet. Dabei ist durch die Führungselemente 125 eine Bewegung des Sternpunktleiters 124 entlang seiner Längsrichtung bzw. in Umfangsrichtung bezüglich der Längsachse A hemmbar und durch die Führungselemente 126 eine Bewegung des Sternpunktleiters 124 quer zu seiner Längsrichtung bzw. in Radialrichtung bezüglich der Längsachse A hemmbar. Der Sternpunktleiter 124 ist mit weiteren Anschlussabschnitten 127 der Statorwicklung 5 elektrisch leitfähig und mechanisch verbunden. Für jeden weiteren Anschlussabschnitt 127 ist eine weitere Durchgangsöffnung 128 (siehe Fig. 7) im Basisabschnitt des zweiten Isolationskörpers 113 ausgebildet.

Wie in Fig. 7 zu erkennen ist, weist der zweite Isolationskörper 113 ferner mehrere Befestigungsabschnitte 129a, 129b, 129c, 129d, 129e, 130a, 130b, 130c, 130d auf, die in zum ersten Isolationskörper 13 weisende Richtung vom Basisabschnitt 114 abstehen und dazu eingerichtet sind, den ersten Isolationskörper 13 am zweiten Isolationskörper 113 zu befestigen. Dabei sind die Befestigungsabschnitte 129a-e als Rastelemente ausgebildet ist, die eine Durchgangsöffnung des Basisabschnitts 15 des ersten Isolationskörpers 14 durchsetzen und zum Befestigen auf der ersten Seite 16 den Basisabschnitts 15 des ersten Isolationskörpers 13 hintergreifen. Die Befestigungsabschnitte 130a-d sind hingegen jeweils mit einem den Basisabschnitt 15 des ersten Isolationskörpers 13 durchsetzenden Befestigungsmittel 131, hier beispielsweise einer Schraube, in Eingriff.

Fig. 12 ist eine Prinzipskizze eines Fahrzeugs 200 mit einem Ausführungsbeispiel eines elektrischen Antriebs 201.

Der elektrische Antrieb 201 weist eine aus der Statorvorrichtung 1 und einem Rotor 202, der drehbar bezüglich der Statorvorrichtung 1 gelagert ist, gebildete elektrische Maschine 203 auf. Die elektrische Maschine 203 ist beispielsweise ein permanent oder elektrisch erregter Synchronmotor oder ein Asynchronmotor.

Daneben weist der elektrische Antrieb 201 einen Stromrichter 204 in Gestalt eines Wechselrichters auf, der zur elektrischen Versorgung der Statorwicklung 5 (siehe Fig. 1) eingerichtet ist. Der Stromrichter 204 ist über elektrische Leiter 205, beispielsweise jeweils in Gestalt einer Stromschiene, mit der Statorwicklung verbunden. Dabei ist jeder elektrische Leiter 205 an einem der Befestigungsmittel 24 eines der Anschlusselemente 14a-c (siehe Fig. 3) elektrisch leitfähig befestigt, sodass die elektrisch leitfähige Verbindung der Anschlussabschnitte 10a-c, 11a-c über die Anschlusselemente 14a-c mit den elektrischen Leitern 205 ausgebildet ist.

Das Fahrzeug 200 weist ferner Räder 206 auf. Die elektrische Maschine 202 ist dazu eingerichtet ist, wenigstens eines der Räder 206 indirekt, beispielsweise über ein Getriebe (nicht gezeigt) anzutreiben oder direkt, beispielsweise in Gestalt eines Radnabenmotors, anzutreiben. Das Fahrzeug 200 kann ferner eine mit dem Rad 206 gekoppelte Achse (nicht gezeigt) aufweisen, die die elektrische Maschine 203 des Fahrzeugs 200 direkt oder indirekt antreibt.

Das Fahrzeug 200 ist ein batterieelektrisches Fahrzeug (BEV), ein mittels einer Brennstoffzelle betriebenes Fahrzeug oder ein Hybridfahrzeug. Im letzteren Fall weist das Fahrzeug 200 ferner einen Verbrennungsmotor (nicht gezeigt) auf.

## Patentansprüche

1. Anschlussvorrichtung (2) für einen Stator (3) einer elektrischen Maschine (203), aufweisend
- einen elektrisch isolierenden Isolationskörper (13), der einen plattenförmigen Basisabschnitt (15) mit einer ersten Seite (16), mit einer der ersten Seite (16) gegenüberliegenden zweite Seite (17), und mit einer Ausnehmung (18a-c) sowie einen an der ersten Seite angeordneten Positionierabschnitt (20a-c) aufweist; und
- ein elektrisch leitfähiges Anschlusselement (14a-c), das
(i) zwei Schenkelabschnitte (21a, 21b), die sich von der ersten Seite (16) des Basisabschnitts (15) weg erstrecken und jeweils einen zur Ausnehmung (18a-c) weisenden Vorsprung (23) aufweisen,
(ii) einen Verbindungsabschnitt (22), der die Schenkelabschnitte (21a, 21b) an ihrem der ersten Seite (16) des Basisabschnitts (15) abgewandten Ende verbindet,
(iii) und ein Befestigungsmittel (24) zum elektrisch leitfähigen und mechanischen Verbinden des Verbindungsabschnitts (22) mit einem elektrischen Leiter (205)
aufweist und durch den Positionierabschnitt (20a-c) am Isolationskörper angeordnet ist;
wobei in der Ausnehmung (18a-c) zwei Anschlussabschnitte (10a-c, 11a-c) einer Statorwicklung (5) des Stators (3) zum elektrisch leitfähigen und mechanischen Verbinden mit dem Vorsprung (23) der Schenkelabschnitte (21a, 21b) anordenbar sind, um eine elektrische leitfähige Verbindung der Anschlussabschnitte (10a-c, 11a-c) über das Anschlusselement (14a-c) mit dem elektrischen Leiter (205) auszubilden.

2. Anschlussvorrichtung nach einem der vorhergehenden Ansprüche, wobei
- das Befestigungsmittel (24) ein Innengewinde (25) aufweist und/oder
- im Verbindungsabschnitt (22) eine Durchgangsöffnung (26) ausgebildet ist, in die das Befestigungsmittel (24) eingepresst ist.

3. Anschlussvorrichtung nach einem der vorhergehenden Ansprüche, wobei das Befestigungsmittel (24) als Buchse ausgebildet ist, die sich vom Verbindungsabschnitt (22) in einen durch die Schenkelabschnitte (21a, 21b) begrenzten Zwischenraum (27) erstreckt.

4. Anschlussvorrichtung nach Anspruch 3, wobei
der Positionierabschnitt (20a-c) ein auf der ersten Seite (16) ausgebildetes Zentrierelement (28) aufweist, das zumindest abschnittsweise gegengleich zur Buchse ausgebildet.

5. Anschlussvorrichtung nach einem der vorhergehenden Ansprüche,
der Positionierabschnitt (20a-c) ein sich von einem der Schenkelabschnitte (21a) zum anderen der Schenkelabschnitte (21b) erstreckendes Begrenzungselement (29) aufweist, durch das eine Translationsbewegung des Anschlusselements (14a-c) parallel zum Basisabschnitt (15) hemmbar ist.

6. Anschlussvorrichtung nach einem der vorhergehenden Ansprüche, wobei der Positionierabschnitt (20a-c) für zumindest einen Schenkelabschnitt (21a, 21b) des durch ihn positionierten Anschlusselements (14a-c) wenigstens einen außerhalb der Schenkelabschnitte (21a, 21b) angeordneten Anschlag (30a-d) aufweist, durch den eine Rotation des Anschlusselements (14a-c) um eine senkrecht zum Basisabschnitt (15) stehende Rotationsachse hemmbar ist und/oder durch den eine Translationsbewegung des Anschlusselements (14a-c) parallel zum Basisabschnitt (15) hemmbar ist.

7. Anschlussvorrichtung nach einem der vorhergehenden Ansprüche, wobei der Isolationskörper (13) Abschirmelemente (33a-e) aufweist, die das Anschlusselement (14a-e) schenkelabschnittseitig zur Verlängerung von Luft- und Kriechstrecken umgeben.

8. Anschlussvorrichtung nach einem der vorhergehenden Ansprüche, wobei der Positionierabschnitt (20a-c) für jeden Schenkelabschnitt (21a, 21b) des durch ihn positionierten Anschlusselements (14a-c) ein Halteelement (31a, 31b) aufweist, durch welchen eine von der ersten Seite (16) wegweisende Bewegung des Anschlusselements (14a-c) hemmbar ist.

9. Anschlussvorrichtung nach Anspruch 9, wobei
- die Schenkelabschnitte (21a, 21b) jeweils eine Ausnehmung (32) aufweisen und das Halteelement (31a, 31b) zum formschlüssigen Eingreifen in die Ausnehmung (32) ausgebildet ist und/oder
- das Halteelement (31a, 31b) exzentrisch bezüglich des Schenkelabschnitts (21a, 21b) angeordnet ist, um ein Wechselwirken des Schenkelabschnitts (21a, 21b) mit dem Halteelement (31a, 31b) bei einer um 180° gedrehten Anordnung zu hemmen.

10. Anschlussvorrichtung nach einem der vorhergehenden Ansprüche, ferner aufweisend
einen zweiten Isolationskörper (113), der auf der zweiten Seite (17) des ersten Isolationskörpers (13) angeordnet ist und einen plattenförmigen Basisabschnitt (114) und mehrere Abstandshalter (117), die den Basisabschnitt (114) des zweiten Isolationskörpers (113) vom Basisabschnitt (15) des ersten Isolationskörpers (13) beabstanden, aufweist.

11. Anschlussvorrichtung nach Anspruch 10, wobei
der zweite Isolationskörper (113) mehrere Halteelemente (118a-c, 119a-c) aufweist, die vom Basisabschnitt (114) des zweiten Isolationskörpers (113) in vom ersten Isolationskörper (13) wegweisende Richtung abstehen und dazu eingerichtet sind, den zweiten Isolationskörper (113) an einem Wicklungskopf (9) des Stators (3) zu haltern.

12. Anschlussvorrichtung nach Anspruch 10 oder 11, wobei der zweite Isolationskörper (113) mehrere Befestigungsabschnitte (129a-e, 130a-d) aufweist, die in zum ersten Isolationskörper (13) weisende Richtung vom Basisabschnitt (114) des zweiten Isolationskörpers (113) abstehen und dazu eingerichtet sind, den ersten Isolationskörper (13) am zweiten Isolationskörper (113) zu befestigen, wobei
- zumindest ein Teil der Befestigungsabschnitte (129a-e) als Rastelement ausgebildet ist, das eine Durchgangsöffnung des Basisabschnitts (15) des ersten Isolationskörpers (13) durchsetzt und zum Befestigen den Basisabschnitt (15) des ersten Isolationskörpers (13) auf dessen erster Seite (16) hintergreift und/oder
- zumindest ein Teil der Befestigungsabschnitte (130a-d) mit einem den Basisabschnitt (15) des ersten Isolationskörpers (13) durchsetzenden Befestigungsmittel (131), insbesondere eine Schraube, in Eingriff ist.

13. Statorvorrichtung (1) für eine elektrische Maschine (201), aufweisend:
- einen Stator (3), aufweisend einem Statorkern (4) mit einer Statorlängsachse (6), einer ersten Stirnseite (7) und einer der ersten Stirnseite (7) axial bezüglich der Statorlängsachse (6) gegenüberliegenden zweiten Stirnseite (8), einer Statorwicklung (5), die an der ersten Stirnseite (7) einen Wicklungskopf (9) ausbildet und mehrere sich über den Wicklungskopf (9) hinaus erstreckende Anschlussabschnitte (10a-c, 11a-c) aufweist, und
- eine Anschlussvorrichtung (2) nach einem der vorhergehenden Ansprüche, wobei die zwei Anschlussabschnitte (10a-c, 11a-c) elektrisch leitfähig und mechanisch mit den Schenkelabschnitten (21a, 21b) des Anschlusselements (14a-c), insbesondere stoffschlüssig, verbunden sind.

14. Elektrischer Antrieb (201) für ein Fahrzeug (200), aufweisend:
- eine Statorvorrichtung (1) nach Anspruch 13,
- einen drehbar bezüglich der Statorvorrichtung (1) gelagerten Rotor (202), sodass die Statorvorrichtung (1) und der Rotor (202) eine elektrische Maschine (203) ausbilden,
- einen Stromrichter (204) zur elektrischen Versorgung der Statorwicklung (5) und
- einen elektrischen Leiter (205), welcher eine elektrisch leitfähige Verbindung zwischen dem Stromrichter (204) und dem Anschlusselement (14a-c) herstellt und an dem das Befestigungsmittel (24) des Anschlusselements (14a-c) elektrisch leitfähig befestigt ist.
